# EUROPEAN PATENT APPLICATION

(11) **EP 2 083 599 A2**
(43) Date of publication of application: **29.07.2009**
(21) Application number: 08165033.5
(22) Date of filing: 24.09.2008
(51) Int. Cl.: H04W 64/00

(54) **Wireless communication terminal and wireless communication terminal control method**

(30) Priority: 24.01.2008 JP 2008014102
(71) Applicant: Fujitsu Limited, Kawasaki-shi, Kanagawa 211-8588 (JP)
(72) Inventor: Hara, Yasushi, Kawasaki-shi, Kanagawa 211-8588 (JP)
(74) Representative: Wilding, Frances Ward

(57) **Abstract**

A mobile phone terminal acquires and stores therein current position information thereof from a public wireless base station. The mobile phone terminal reads out a profile name corresponding to the acquired position information from a public wireless base station WLAN profile association table, and sets the read WLAN profile as a scan profile. Then, the mobile phone terminal scans the wireless LAN access point with the set WLAN profile when the mobile phone terminal is out of the WLAN service area.

## Description

### BACKGROUND OF THE INVENTION

### 1. Field of the Invention

The present invention relates to a wireless communication terminal, a wireless communication terminal control method, and a wireless communication terminal control program that perform first wireless communication via a base station in a wireless public network, and perform second wireless communication via a wireless local area network (LAN) access point in a wireless LAN communication network having a smaller area than that of the wireless public network.

### 2. Description of the Related Art

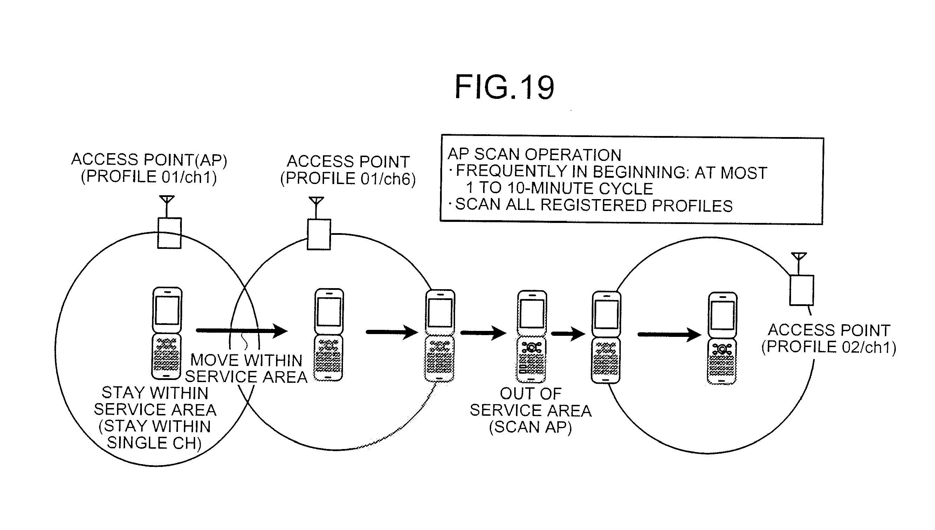

A mobile phone (for example, a fixed mobile convergence (FMC) terminal, and a dual terminal) having a public network having a wide area (for example, freedom of mobile multimedia access (FOMA)), and a wireless communication network having a small area such as wireless local area network (WLAN) has been known. Such a mobile phone makes a call by data communication and voice over internet protocol (VoIP) in a communication area of WLAN-Access Point (AP), and performs operation of receiving Beacon in the absence of a call by the data communication and the VoIP. In the area outside WLAN-AP, the operation of receiving Beacon is stopped, and operation of scanning outside the WLAN area is performed regularly (see Fig. 19). A scan interval of the scan operation is set shorter so that connection can be established soon after entering the WLAN-AP.

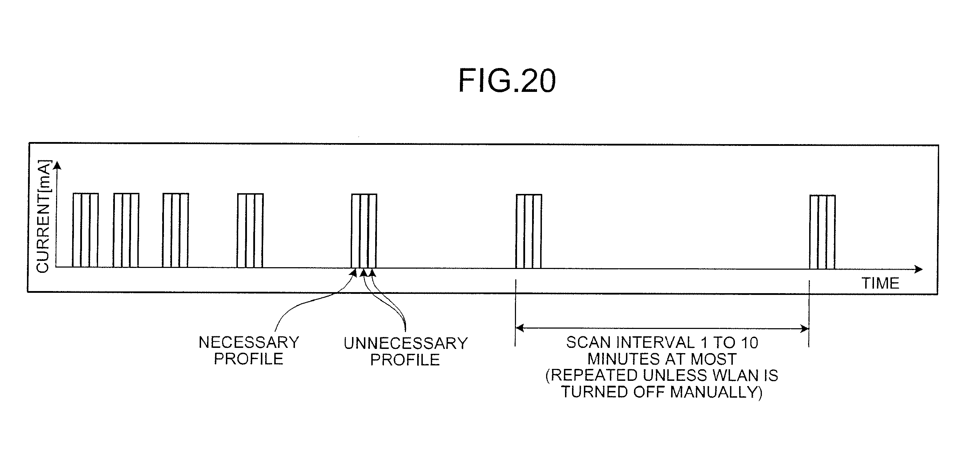

When a mobile terminal is out of the WLAN-AP, a power source for WLAN can be turned off manually, but if a user forgets to turn off the power source, the scan operation is performed, and unnecessary electricity is consumed (see Fig. 20). For example, the user goes to a business trip without turning off the power source for WLAN, electricity is consumed by unintended scan operation, and the mobile terminal cannot be used as a telephone.

Techniques for solving unnecessary scan operation include a method disclosed in Japanese Patent Application Laid-open No. 2007-116294 in which a contactless integrated circuit (IC) card is attached to a terminal, an entrance/exit managing apparatus (card reader) is prepared, IC card information is rewritten at the time of exit, and thereby a power source for WLAN is turned off. Moreover, Japanese Patent Application Laid-open No. 2006-295643 discloses a method of turning on/off the power source for WLAN by a mobile phone base station notifying the terminal of a wireless LAN base station information in the base station.

As a technique for solving unnecessary scan operation, a method of increasing the scan interval gradually, reducing the number of times of the scan operation, and suppressing consumed electricity is disclosed in Japanese Patent Application Laid-open No. 2006-13594. Japanese Patent Application Laid-open No. 2005-229399 discloses a method of turning on/off the power source for WLAN by acquiring position information using global positioning system (GPS), and specifying WLAN areas.

The technique of Japanese Patent Application Laid-open No. 2007-116294 has a problem that many additional facilities are required and the cost increases because an entrance/exit managing apparatus needs to be provided. The technique of Japanese Patent Application Laid-open No. 2006-295643 has a problem that it is not suited for the access point for use by a corporation (company) and an individual and a complicate system architecture including a carrier is necessary because a mobile phone base station notifies a terminal of wireless LAN base station information in the base station.

The technique of Japanese Patent Application Laid-open No. 2006-13594 has a problem that response at the time of restoration deteriorates because a scan interval is increased gradually. The technique of Japanese Patent Application Laid-open No. 2005-229399 has a problem that electricity is consumed for position detection by GPS because position information is acquired by using GPS.

### SUMMARY

It is desirable to at least partially solve the problems in the conventional technology.

According to embodiments of one aspect of the present invention, a wireless communication terminal performs first wireless communication via a base station in a public network, and second wireless communication via a wireless LAN access point in a wireless LAN communication network that has a smaller area than that of the wireless public network. The wireless communication terminal includes a base station profile storing unit that stores position information transmitted from the base station, and a wireless LAN profile that is wireless LAN access point information in a communication area of the base station, in association with the position information; a current position information receiving/storing unit that acquires and stores therein current position information of the wireless communication terminal from the base station; a wireless profile setting unit that reads out a wireless LAN profile corresponding to the current position information acquired by the current position acquiring/storing unit from the base station profile storing unit, and sets the wireless LAN profile; and a wireless profile scan unit that scans the wireless LAN access point with the wireless LAN profile that is set by the wireless profile setting unit when the wireless communication terminal is out of a communication service area of the wireless LAN access point.

According to embodiments of another aspect of the present invention, a method is for performing first wireless communication via a base station in a public network, and second wireless communication via a wireless LAN access point in a wireless LAN communication network that has a smaller area than that of the wireless public network. The method includes storing, in a base station profile storing unit, position information transmitted from the base station, and a wireless LAN profile that is wireless LAN access point information in a communication area of the base station, in association with the position information; acquiring current position information of the wireless communication terminal from the base station; reading out a wireless LAN profile corresponding to the acquired current position information from the base station profile storing unit; setting the wireless LAN profile; and scanning the wireless LAN profile set by the setting when the wireless communication terminal is out of a communication service area of the wireless LAN access point.

According embodiments of still another aspect of the present invention, a computer program product causes a computer to perform the method according to the present invention.

The above and other desirable features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Preferred features of the present invention will now be described, purely by way of example, with reference to the accompanying drawings, in which:-
Fig. 1 is a schematic for explaining an outline and features of a mobile phone terminal according to a first embodiment of the present invention;
Fig. 2 is a block diagram of the mobile phone terminal 10 according to the first embodiment shown in Fig. 1;
Fig. 3 is a table for showing an example of a public wireless base station WLAN profile association table;
Fig. 4 is a table for showing an example of a scan profile storing unit when out of the WLAN service area;
Fig. 5 is a diagram for explaining registration process by an operation;
Fig. 6 is a schematic for explaining position information registration process;
Fig. 7 is a flowchart for showing an operation of scan profile setting process by the mobile phone terminal 10 according to the first embodiment shown in Fig. 1;
Fig. 8 is a flowchart for showing an operation of scan interval setting processing by the mobile phone terminal 10 according to the first embodiment shown in Fig. 1;
Fig. 9 is a flowchart for showing an operation of profile registration processing of the mobile phone terminal 10 according to the first embodiment shown in Fig. 1;
Fig. 10 is a table for showing an example of a public wireless base station WLAN profile association table 14b held by a mobile phone terminal 10a according to a second embodiment of the present invention;
Fig. 11 is a schematic for explaining processing of registration for each wireless channel,
Fig. 12 is a flowchart for explaining procedure of registration for each wireless channel of the mobile phone terminal 10a according to the second embodiment;
Fig. 13 is a schematic for explaining processing of table auto-registration;
Fig. 14 is a flowchart for showing processing operation of the table auto-registration;
Fig. 15 is a schematic for explaining scan interval setting process
Fig. 16 is a schematic for explaining scan processing after a mobile phone terminal 10b according to a third embodiment of the present invention goes out of the WLAN service area;
Fig. 17 is a flowchart for explaining procedure of scan processing after the mobile phone terminal 10b according to the third embodiment goes out of the WLAN service area;
Fig. 18 is a flowchart for explaining procedure of another scan processing after the mobile phone terminal 10b according to the third embodiment goes out of the WLAN service area;
Fig. 19 is a schematic for explaining a conventional technique; and
Fig. 20 is a schematic for explaining a conventional technique.

### DETAILED DESCRIPTION OF THE PREFERRED EMBODIMENTS

A wireless communication terminal, a wireless communication terminal control method, and a wireless communication terminal control program according to exemplary embodiments of the present invention will be explained below in detail with reference to accompanying drawings.

In the following, an outline and features of a mobile phone terminal according to a first embodiment of the present invention, a configuration and a flow of processing of the mobile phone terminal, and finally effects of the first embodiment will be explained. In the following example, a fixed mobile convergence (FMC) terminal and a dual terminal are exemplified as mobile phone terminals having both a wide-area public network (FOMA, for example), and a small-area wireless communication network such as WLAN.

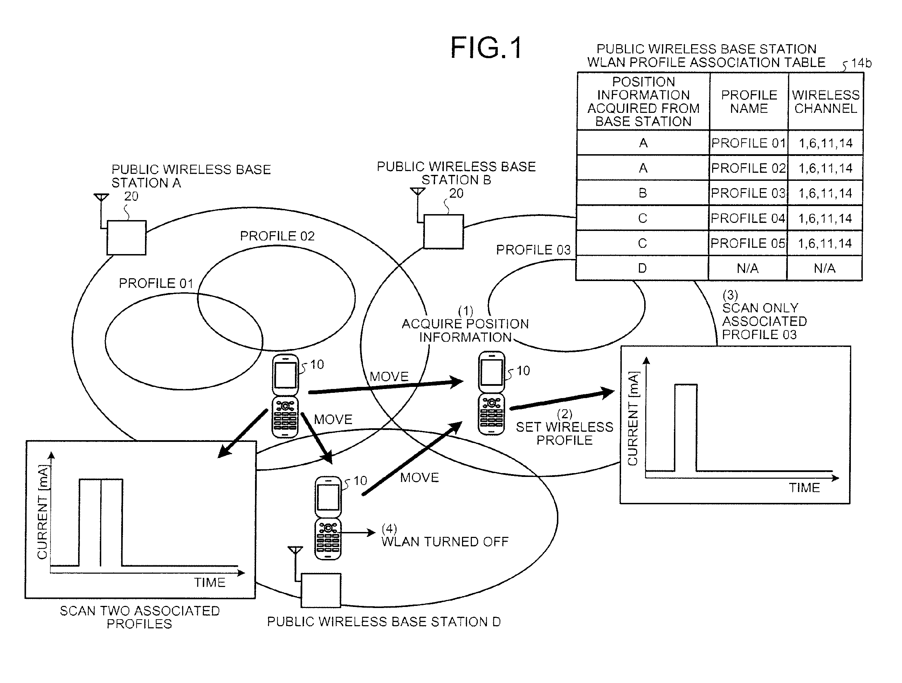

An outline and features of a mobile phone terminal according to the first embodiment will be explained with reference to Fig. 1. Fig. 1 is a schematic for explaining the outline and the features of the mobile phone terminal according to the first embodiment.

A mobile phone terminal 10 according to the first embodiment can perform both a wireless communication via a FOMA wireless base station 20 (hereinafter, a public wireless base station) in a wireless public network, and a wireless communication via a WLAN access point in a WLAN communication network having a smaller area than that of the wireless public network. The mobile phone terminal 10 can be realized with less cost and with a simple configuration, and provides a significant power saving effect.

Explaining specifically about its main features, as shown in Fig. 1, the mobile phone terminal 10 has a public wireless base station WLAN profile association table 14b that stores position information acquired from a base station, names of wireless LAN profiles that are wireless LAN access point information in a communication area of the public wireless base station, and wireless channels in the profiles, in association with each other.

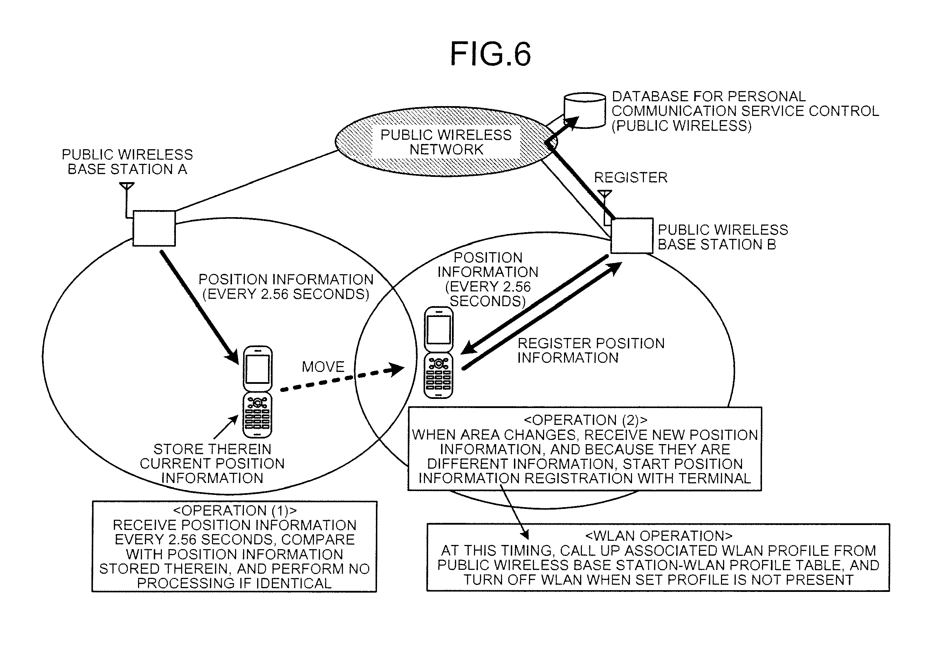

In this configuration, the mobile phone terminal 10 receives and stores therein its current position information from a public wireless base station 20 (see (1) in Fig. 1). Specifically, the mobile phone terminal 10 receives the position information every 2.56 seconds by a cellular system, and when the information is different from that stored in the mobile phone terminal 10 starts position information registration with the terminal (see Fig. 6 described below).

The mobile phone terminal 10 reads out a profile name corresponding to the acquired current position information from the public wireless base station WLAN profile association table 14b, and sets the read WLAN profile as a scan profile (see (2) in Fig. 1).

The mobile phone terminal 10 then scans the wireless LAN access point with the set WLAN profile at the time when it is out of the WLAN service area, that is when it is out of the communication area of the wireless LAN access point (see (3) in Fig. 1). In other words, explaining with reference to the example shown in Fig. 1, the mobile phone terminal 10 scans the wireless LAN access point with "Profile1" and "Profile2" in a public wireless base station "A", and the mobile phone terminal 10 scans the wireless LAN access point with only "Profile3" in a public wireless base station "B".

The mobile phone terminal 10 turns off power source for WLAN when it is out of the WLAN service area, and the WLAN profile is not set in the public wireless base station WLAN profile association table 14b, that is when the WLAN profile is not present in the public wireless base station 20 (see (4) in Fig. 1).

As described above, the mobile phone terminal 10 turns on/off the power source for WLAN depending on a public wireless base station area, unnecessary electricity for cellular search at the time when the mobile phone terminal 10 is out of the service area can be reduced, only necessary WLAN profiles are scanned at a location where they are necessary, and connection becomes available as soon as the mobile phone terminal 10 enters an access point. Accordingly, a mobile phone terminal that can be realized with less cost and a simple configuration, and provides a significant power saving effect can be provided as in its main features described above. Configuration of Mobile Phone terminal 10

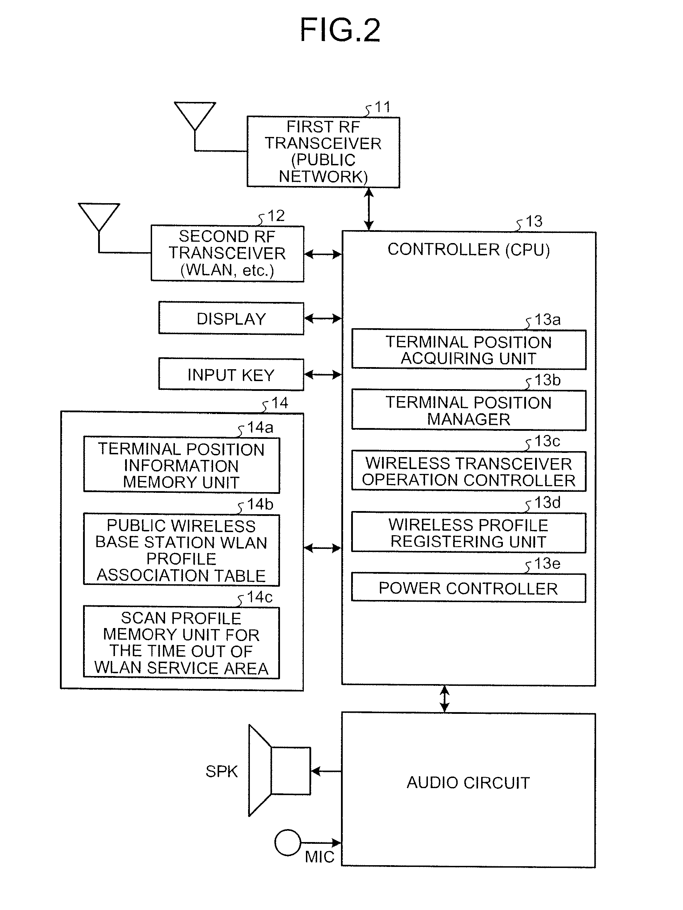

The configuration of the mobile phone terminal 10 shown in Fig. 1 will now be explained with reference to Fig. 2. Fig. 2 is a block diagram of the mobile phone terminal 10 according to the first embodiment. As shown in Fig. 2, the mobile phone terminal 10 has a first RF transceiver 11, a second RF transceiver 12, a controller 13, and a storing unit 14. Processing of these units will be explained below.

The first RF transceiver 11 transmits and receives information wirelessly via the FOMA wireless base station 20 in the wireless public network. The second RF transceiver 12 transmits and receives information wirelessly via the WLAN access point in the WLAN communication network.

The storing unit 14 stores therein data and programs necessary for various processing by the controller 13, and specifically includes a terminal position storing unit 14a, the public wireless base station WLAN profile association table 14b, and a scan profile storing unit 14c for the time out of the WLAN service area, as the ones closely related to embodiments of the present invention. The terminal position storing unit 14a stores terminal position information acquired by a terminal position acquiring unit 13a explained below.

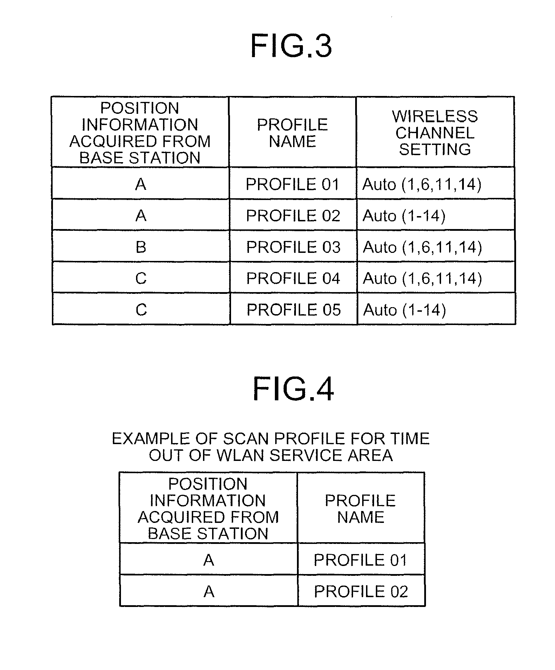

The public wireless base station WLAN profile association table 14b stores as shown in Fig. 3 position information acquired from the public wireless base station, names of wireless LAN profiles that are wireless LAN access point information in a communication area of the public wireless base station, and wireless channels in the profiles, in association with each other.

The scan profile storing unit 14c for the time out of the WLAN service area stores scan profiles at the time of scanning out of the WLAN service area set by a wireless profile registering unit 13d explained below. Specifically, the scan profile storing unit 14c for the time out of the WLAN area stores position information acquired from base stations and profile names in association with each other, as exemplified in Fig. 4. The stored profiles are scanned when out of the WLAN service area.

The controller 13 has an internal memory for storing therein a computer program specifying various processing procedures and required data, and performs various processing using the same. The controller 13 includes the terminal position acquiring unit 13a, a terminal position manager 13b, a wireless transceiver operation controller 13c, the wireless profile registering unit 13d and a power controller 13e as the ones closely related to embodiments of the present invention.

The terminal position acquiring unit 13a receives and stores therein its current position information from the public wireless base station 20. Specifically, the mobile phone terminal 10 receives position information every 2.56 seconds by a cellular system, and notifies the position information to the terminal position manager 13b.

The terminal position manager 13b manages the received position information. Specifically, the terminal position manager 13b compares as shown in Fig. 6 the position information notified from the terminal position acquiring unit 13a and position information stored in the terminal position storing unit 14a, and performs no processing if they are identical with each other. When they are not identical, the terminal position manager 13b starts position information registration process (cellular operation) with the terminal.

The terminal position manager 13b searches the public wireless base station WLAN profile association table 14b based on the position information, and reads out a profile name corresponding to the acquired position information. When a profile corresponding to the public wireless base station is present, the terminal position manager 13b sets the read profile name in the scan profile storing unit 14c for the time out of the WLAN service area, as a scan profile at the time of scanning out of the service area.

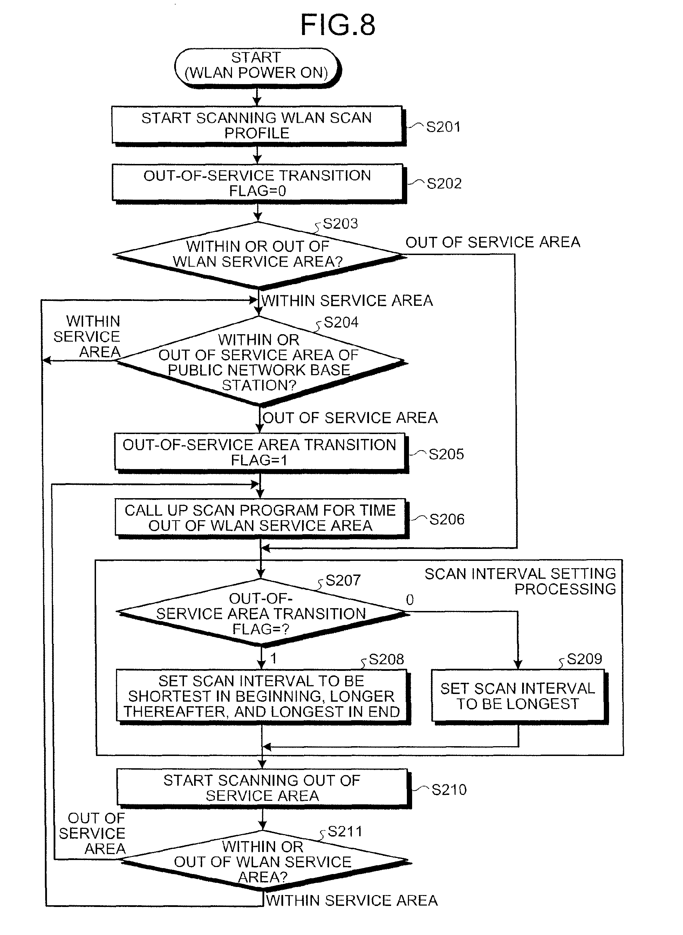

The wireless transceiver operation controller 13c scans the wireless LAN access point with the WLAN profile set by the terminal position manager 13b when out of the WLAN service area. Specifically, the wireless transceiver operation controller 13c reads out the scan profile storing unit 14c for the time out of the WLAN service area when scanning out of the service area when out of the WLAN service area, and when the WLAN profile is stored scans the wireless LAN access point with the read WLAN profile. When the WLAN profile is not set, the wireless transceiver operation controller 13c notifies the power controller 13e of this fact. When scanning the WLAN profile, scan intervals are set. This setting processing is explained in detail below with reference to Fig. 8.

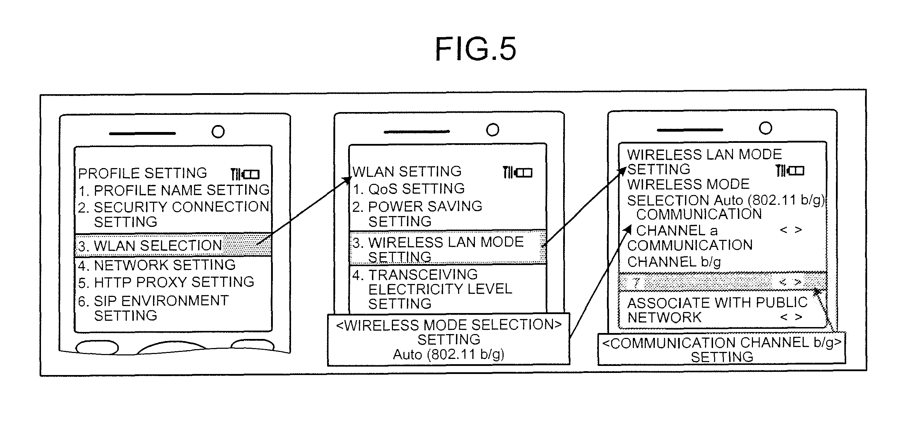

The wireless profile registering unit 13d registers position information, and profiles in association with each other in the public wireless base station WLAN profile association table 14b. Specifically, when a WLAN profile is input by a manual operation with input keys, a complete button is pressed, and registration in association with the current public wireless base station is selected as shown in Fig. 5, the wireless profile registering unit 13d acquires current value data from the terminal position information, and rewrites data in the public wireless base station WLAN profile association table 14b.

The power controller 13e controls to turn off a power source for WLAN when a profile corresponding to the public wireless base station is not present when out of the WLAN service area. Specifically, the power controller 13e turns off the power source for WLAN when notified by the wireless transceiver operation controller 13c that a WLAN profile is not set.

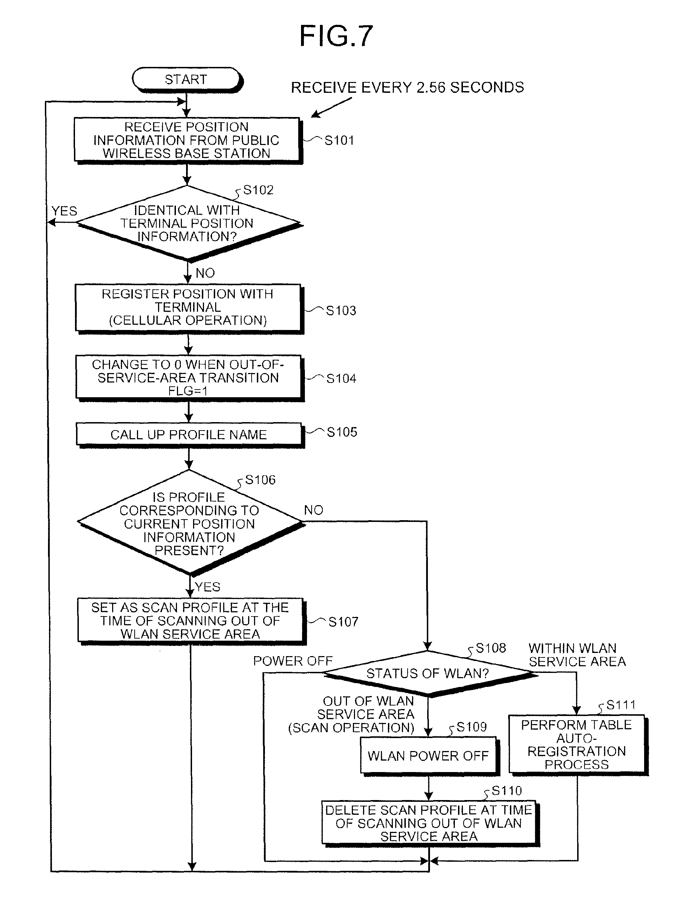

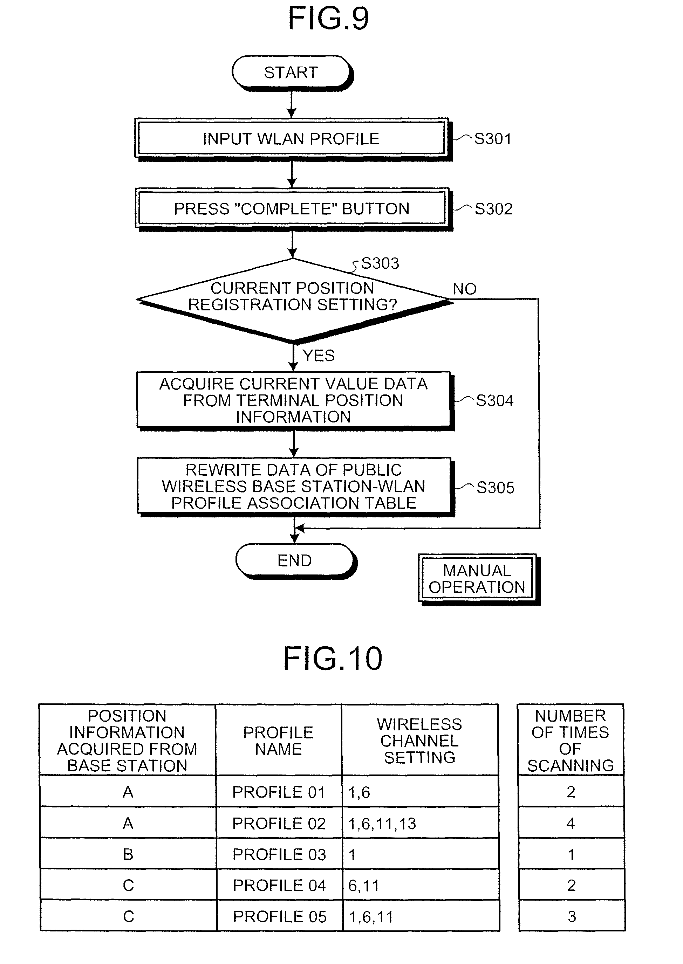

Processing by the mobile phone terminal 10 according to the first embodiment will now be explained with reference to Figs. 7 to 9. Fig. 7 is a flowchart for showing an operation of scan profile setting process by the mobile phone terminal 10 according to the first embodiment, Fig. 8 is a flowchart for showing an operation of scan interval setting processing by the mobile phone terminal 10 according to the first embodiment, and Fig. 9 is a flowchart for showing an operation of profile registration processing of the mobile phone terminal 10 according to the first embodiment.

As shown in Fig. 7, when the mobile phone terminal 10 receives position information from the public wireless base station (step S101), the mobile phone terminal 10 determines whether the position information is identical with the terminal position information stored therein (step S102), and when identical returns to the step S101 without performing any processing. On the other hand, when the received position information and the stored position information are different, the mobile phone terminal 10 performs position registration process with the terminal (cellular operation) (step S103).

Then, when an out-of-service transition flag is "1", the mobile phone terminal 10 changes the flag to "0" (step S104), searches the public wireless base station WLAN profile association table 14b, and calls up a profile name corresponding to the current position information (step S105).

When the profile corresponding to the current position information is present as a result (YES at the step 106), the mobile phone terminal 10 sets the read profile name at the scan profile storing unit 14c for the time out of the WLAN service area as a scan profile for the time out of the service area (step S107).

On the other hand, when a profile corresponding to the public wireless base station is not present (NO at the step 106), the mobile phone terminal 10 determines the status of WLAN (step S108). The mobile phone terminal 10 turns off power source for WLAN when out of the WLAN service area (step S109), deletes a scan profile for the time scanning out of the WLAN service area (step S110), and reduces wasteful power consumption.

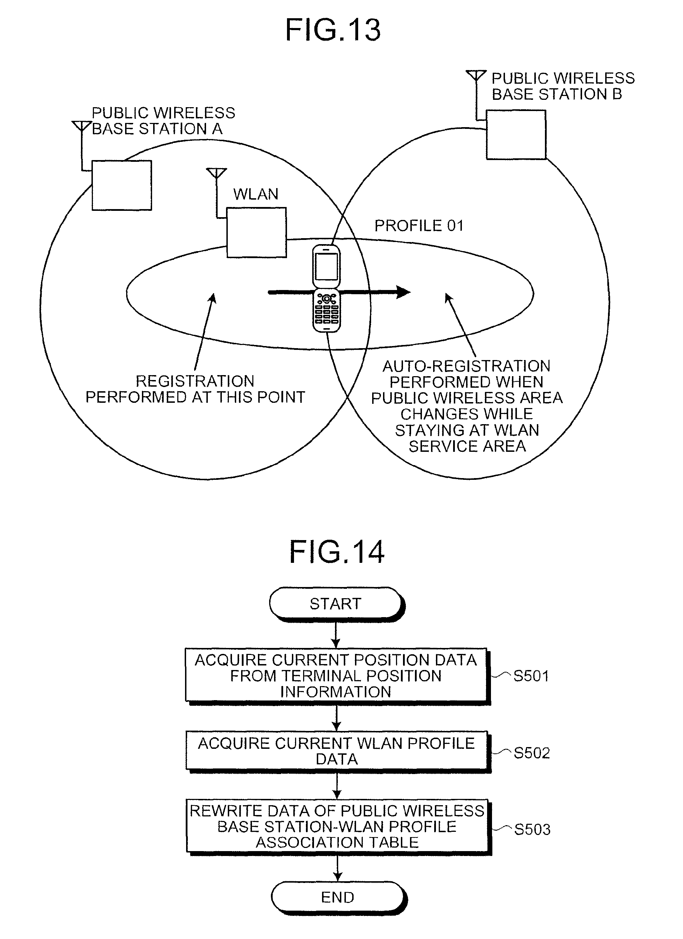

Moreover, when the status of the WLAN is within the WLAN service area, the mobile phone terminal 10 performs table auto-registration process (step S111). Explaining the table auto-registration process with reference to Fig. 14, the mobile phone terminal 10 acquires current position data from the terminal position information (step S501), and acquires current WLAN profile data (step S502)

The mobile phone terminal 10 then rewrites data of the public wireless base station WLAN profile association table 14b (step S503). Specifically, as shown in Fig. 13, the mobile phone terminal 10 controls to perform auto-registration when the area of the public wireless base station changes while staying in the WLAN service area.

Operation of the scan interval setting process will now be explained with reference to Fig. 8. As shown in Fig. 8, while the out-of-service transition flag is "0", the mobile phone terminal 10 starts scanning the WLAN scan profile (steps S201 and S202), and then determines whether it is within or out of the WLAN service area (step S203). When it is determined that the mobile phone terminal 10 is out of the service area as a result, the process proceeds to a step S207, and the mobile phone terminal performs the scan interval setting process.

On the other hand, when it is determined that the mobile phone terminal 10 is within the service area, the mobile phone terminal 10 determines whether it is within or out of the service area of a public network base station (step S204). When the mobile phone terminal 10 is determined to be out of the service area as a result, the out-of-service area transition flag is set to "1" (step S205), a scan program for the time out of the WLAN service area is called up (step S206), and the scan interval setting process is performed.

In other words, the mobile phone terminal 10 determines whether the out-of-service transition flag is "0" or "1", and when the out-of-service transition flag is "1", sets the scan interval to be the shortest in the beginning, longer thereafter, and the longest in the end, as the scan interval setting process. When the out-of-service transition flag is "0", the mobile phone terminal 10 sets the scan interval to be the longest.

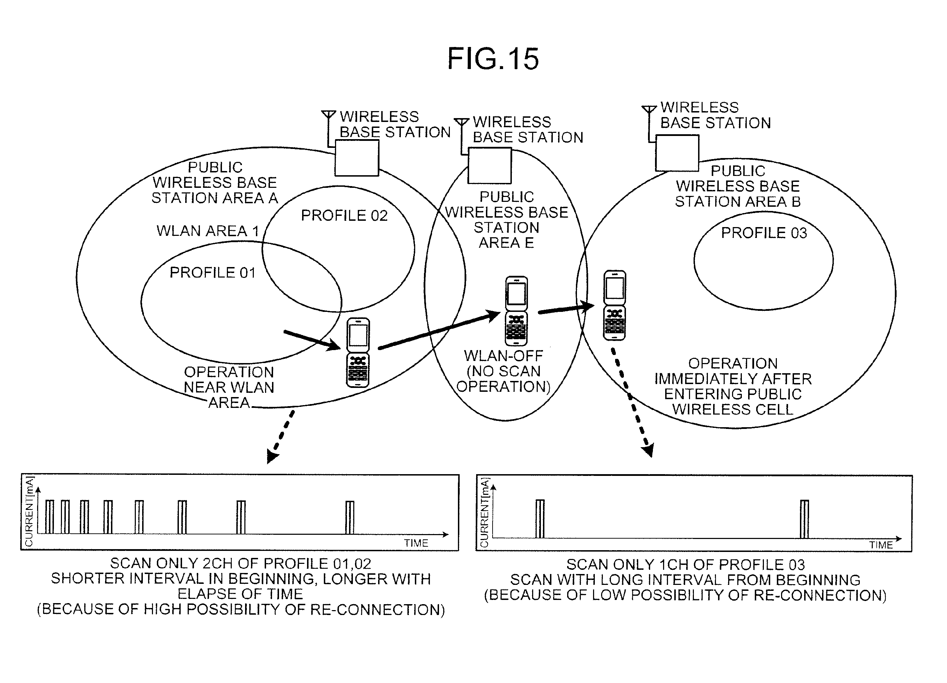

Explaining the scan interval setting process with reference to Fig. 15, when the out-of-service transition flag is "1", the position of the mobile phone terminal 10 is near the WLAN, the mobile phone terminal has just exited the WLAN area, and the possibility of the mobile phone terminal 10 soon returning to the WLAN area is high; therefore, the scan interval is set to be the shortest in the beginning, longer thereafter, and the longest in the end. When the out-of-service transition flag is "0", the position of the mobile phone terminal 10 is far from WLAN, and the possibility of the mobile phone terminal 10 again returning to the WLAN is low; therefore, the scan interval is set to be the longest.

Thereafter, the mobile phone terminal 10 starts scan operation out of the service area (step S210), and determines whether it is within or out of the WLAN service area (step S211). When it is determined to be out of the service area as a result, the process returns to the step S206, and when it is determined to be within the service area, the process returns to the step S204.

Operation of manual profile registration process will now be explained with reference to Fig. 9. As shown in Fig. 9, when a WLAN profile is input by a manual operation with input keys (step S301), a complete button is pressed (step S302), and registration in association with the current public wireless base station is selected (YES at step S303), the mobile phone terminal 10 acquires current value data from terminal position information (for example, public wireless base station ID) (step S304), and rewrites data of the public wireless base station WLAN profile association table 14b (step S305).

As described above, the mobile phone terminal 10 does not require such facilities as an entrance/exit managing apparatus or a card reader, and does not necessitate additional functions to be added to the public network; therefore, the mobile phone terminal 10 can be realized with less cost. The mobile phone terminal 10 can be used for a corporate access point or a personal access point and for an access point like a generally used hotspot, without depending on types of the access points. Moreover, it does not require position detection by GPS, and does not consume unnecessary electricity for on/off control of WLAN; therefore, the mobile phone terminal can be realized with less cost and with a simple configuration, providing a significant power saving effect.

In addition, according to the first embodiment, scan operation is stopped by turning off the power source for WLAN when a wireless profile related to terminal position information is not present; therefore, it is possible to provide a mobile phone terminal that provides a significant power saving effect.

Furthermore, according to the first embodiment, when it becomes out of the WLAN service area from within the service area, the profile is scanned such that the scan operation interval is the shortest in the beginning, and longer thereafter, and the profile is scanned such that the scan operation is long from the beginning when the acquired position information is changed and the position information is stored while it is out of the WLAN service area; therefore, it is possible to optimize the scan operation interval in accordance with the status of the terminal.

In the first embodiment, position information is registered in the public wireless base station WLAN profile association table 14b for each profile, but embodiments of the present invention are not limited to this, and the position information may be registered for each wireless channel.

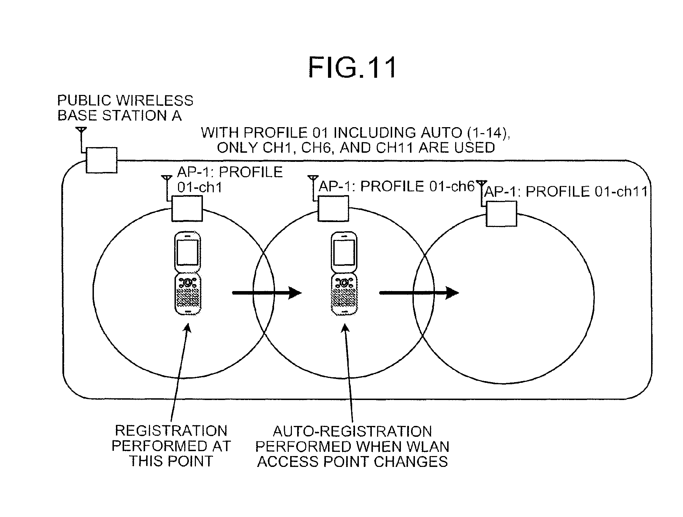

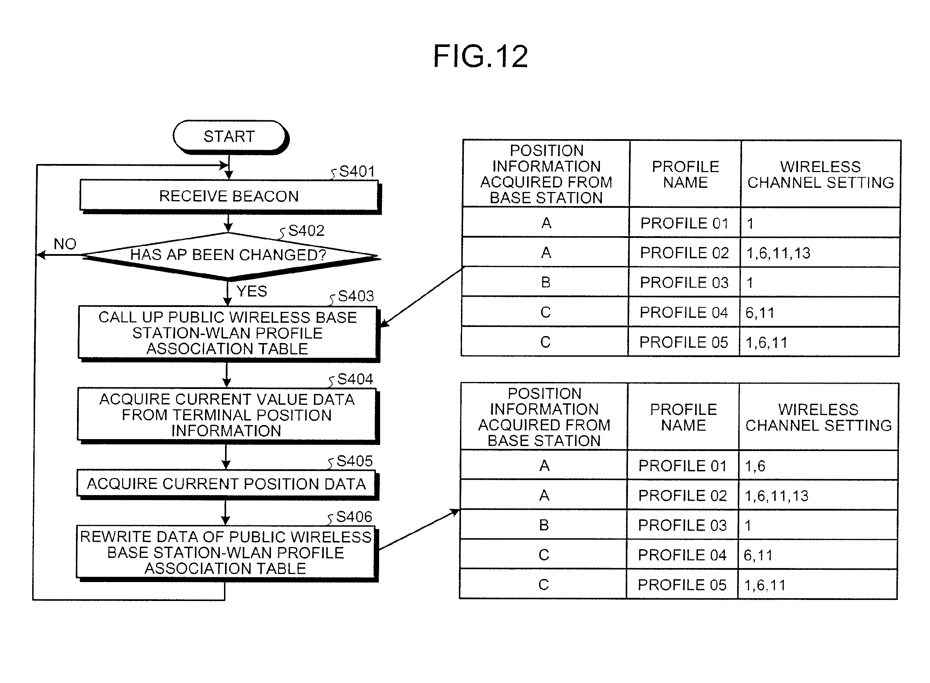

In the following, a second embodiment is explained with reference to Figs. 10 to 12, in which position information is registered in the public wireless base station WLAN profile association table 14b for each wireless channel. Fig. 10 is a table for showing an example of the public wireless base station WLAN profile association table 14b held by the mobile phone terminal 10a according to the second embodiment, Fig. 11 is a schematic for explaining processing of registering position information for each wireless channel, and Fig. 12 is a flowchart for explaining procedure of registering the position information for each wireless channel of the mobile phone terminal 10a according to the second embodiment.

An example of the public wireless base station WLAN profile association table 14b held by the mobile phone terminal 10a according to the second embodiment will be explained. As shown in Fig. 10, the public wireless base station WLAN profile association table 14b stores as in the first embodiment position information acquired from a base station, profile names, and wireless channels in the profiles in association with each other. Unlike the first embodiment, registration in the public wireless base station WLAN profile association table 14b according to the second embodiment is performed for each wireless channel.

Specifically, as shown in Fig. 11, although Profile01 includes 14 channels (ch1 to ch14), actually only ch1, ch6, and ch11 are used in some cases. In such cases, as shown in Fig. 11, when the mobile phone terminal 10a according to the second embodiment moves from the WLAN access point of ch1 to the WLAN access point of ch6, the mobile phone terminal 10a automatically registers ch6 in the public wireless base station WLAN profile association table 14b.

Processing procedure of registration for each wireless channel of the mobile phone terminal 10a according to the second embodiment will be explained with reference to Fig. 12. The mobile phone terminal 10a receives beacon (step S401), and determines whether the access point has changed based on the information included in the received beacon (step S402). When the access point is determined to have changed as a result, the mobile phone terminal 10a calls up the public wireless base station WLAN profile association table 14b (step S403).

The mobile phone terminal 10a then acquires current position data from the terminal position information (step S404), acquires current WLAN profile data (step S405), and rewrites data of the public wireless base station WLAN profile association table 14b (registers ch6 in Profile01 in the example shown in Fig. 12) (step S406).

As described above, only actually used channels are scanned in the second embodiment, and accordingly it is possible to provide a mobile phone terminal providing a more significant power saving effect.

In embodiments of the present invention, after a mobile phone terminal goes out of a WLAN service area, only profiles and channels registered in a public wireless base station to which a profile used immediately before the mobile phone terminal goes out of the WLAN service area belongs may be scanned.

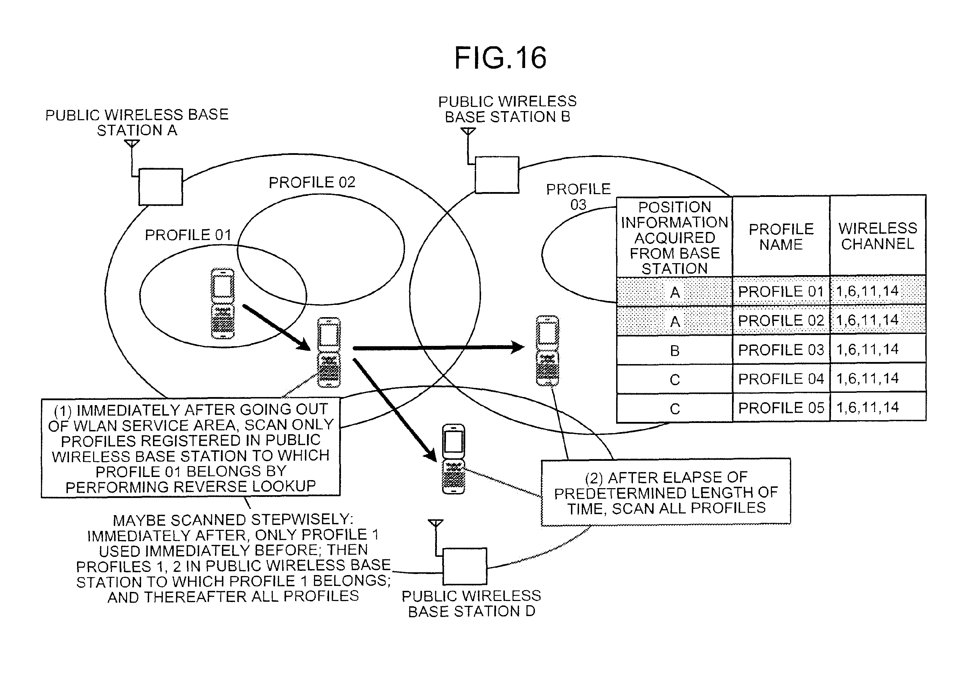

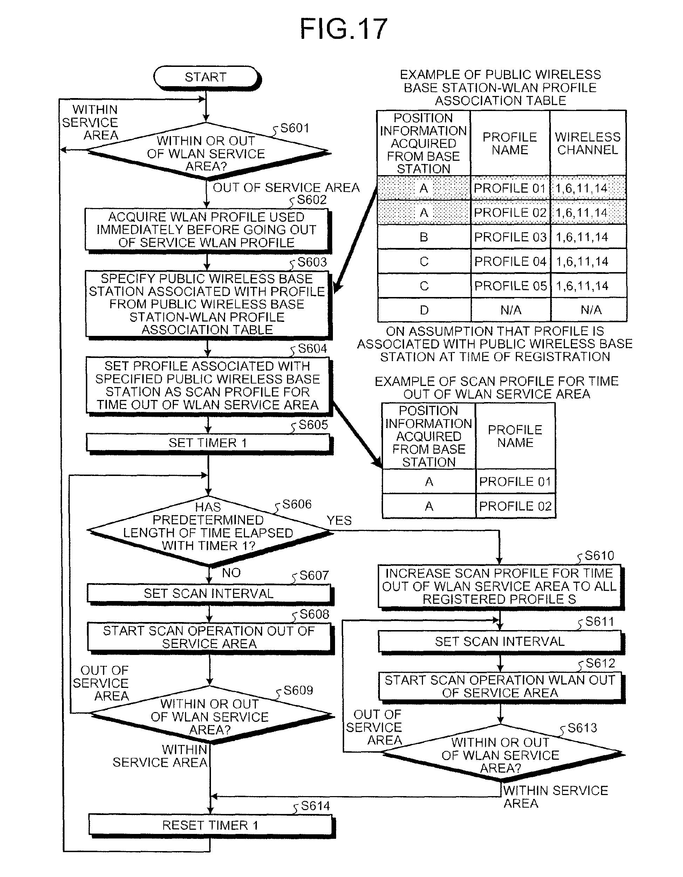

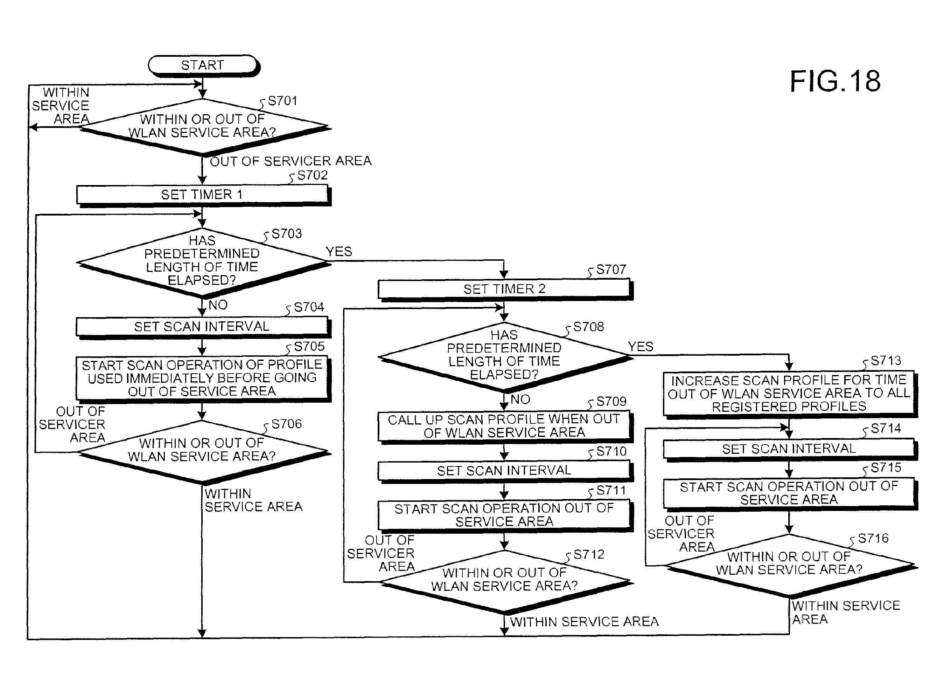

In the following, the mobile phone terminal 10b according to a third embodiment is explained with reference to Figs. 16 to 18, in which profiles and channels registered in a public wireless base station to which a profile used immediately before the mobile phone terminal 10b goes out of a WLAN service area are scanned. Fig 16 is a schematic for explaining scan processing after the mobile phone terminal 10b according to the third embodiment goes out of a WLAN service area, Fig. 17 is a flowchart for showing procedure of the scan processing after the mobile phone terminal 10b according to the third embodiment goes out of the WLAN service area, and Fig. 18 is a flowchart for showing procedure of another scan processing after the mobile phone terminal 10b according to the third embodiment goes out of the WLAN service area.

The scan processing after the mobile phone terminal 10b goes out of the WLAN service area will be explained with reference to an example shown in Fig. 16. As shown in Fig. 16, the mobile phone terminal 10b performs reverse lookup of a table immediately after it goes out of a WLAN service area, and scans the wireless LAN access point with only profiles registered in a public wireless base station to which "Profile01" used immediately before it goes out of the WLAN service area belongs (see (1) in Fig. 16).

After an elapse of a predetermined length of time, the mobile phone terminal 10b scans the wireless LAN access point with all the profiles (see (2) in Fig. 16). Other than changing profiles to be scanned at two steps as described above, profiles to be scanned may be changed at three steps: only immediately previous "Profile01" just after the mobile phone terminal goes out of the WLAN service area; "Profile01" and "Profile02" registered in the public wireless base station to which Profile01 belongs; and all the profiles.

The scan processing after the mobile phone terminal 10b according to the third embodiment goes out of the WLAN service area will be explained with reference to Figs. 17 and 18. Fig. 17 is for explaining the scan processing in a case of changing profiles to be scanned at two steps, and Fig. 18 is for explaining the scan processing in a case of changing profiles to be scanned at three steps.

Specifically, as shown in Fig. 17, when the mobile phone terminal 10b goes out of the WLAN service area, (out of the WLAN service area at step S601), the mobile phone terminal 10b acquires the WLAN profile used immediately before going out of the WLAN profile (step S602), and specifies a public wireless base station associated with the profile acquired from the public wireless base station WLAN profile association table 14b (step S603).

The mobile phone terminal 10b sets the profile corresponding to the specified public wireless base station as a scan profile for the time out of the WLAN service area (step S604), and sets a timer 1 (step S605). The mobile phone terminal 10b then determines whether a predetermined length of time has elapsed with the timer 1 (step S606), and if not sets a scan interval (step S607).

The mobile phone terminal 10b determines whether it is within or out of the WLAN service area (step S609), and if within the WLAN service area resets the time 1, and returns to the processing of the step S601, and if out of the WLAN service area repeats the processing of S606 to S609 until an elapse of a predetermined length of time. When the predetermined length of time has elapsed with the timer 1 (YES at step S606), the mobile phone terminal 10b increases the scan profile for the time out of the WLAN service area to all the registered profiles (step S610), sets the scan interval (step S611), and starts scan operation out of the service area (step S612).

Thereafter, the mobile phone terminal 10b determines whether it is within or out of the WLAN service area (step S613), and if within the WLAN service area resets the timer 1 (step S614), and the process returns to the processing at the step S601, and if out of the WLAN service area the process returns to the processing of the step S611 and repeats the processing.

The scan processing in a case of changing profiles to be scanned at three steps will now be explained with reference to Fig. 18. As shown in Fig. 18, when the mobile phone terminal 10b goes out of the WLAN service area (out of the service area at step S701), the mobile phone terminal 10b sets the timer 1 (step S702), determines whether a predetermined length of time has elapsed (step S703), and if not sets a scan interval (step S704), and starts scan operation of a profile used immediately before going out of the service area (step S705). The mobile phone terminal 10b determines whether it is within or out of the WLAN service area (step S706), and if within the WLAN service area returns to the processing at the step S701, and if out of the WLAN service area repeats the processing at the steps S703 to S706 until an elapse of the predetermined length of time.

When the predetermined length of time has elapsed with the timer 1 (step S703), the mobile phone terminal 10b sets a timer 2 (step S707), and determines whether a predetermined length of time has elapsed with the timer 2 (step S708). When the predetermined length of time has not elapsed after setting the timer 2 (NO at step S708), the mobile phone terminal 10b calls up the scan profile when out of the WLAN service area (step S709), sets a scan interval (step S710), and starts scan operation out of the service area (step S711).

The mobile phone terminal 10b then determines whether it is within or out of the WLAN service area (step S712), and if within the WLAN service area returns to the processing at the step S701, and if out of the WLAN service area repeats the processing at the steps S708 to S712 until an elapse of the predetermined length of time.

On the other hand, when the predetermined length of time has elapsed after setting the timer 2 (YES at step S708), the mobile phone terminal 10b increases the scan profile for the time out of the WLAN service area to all the registered profiles (step S713), sets a scan interval (step S714), and starts the scan operation out of the service area (step S715).

Thereafter, the mobile phone terminal 10b determines whether it is within or out of the WLAN service area (step S716), and if within the WLAN service area returns to the processing at the step S701, and if out of the WLAN service area repeats the processing of the steps S714 to S716 until an elapse of the predetermined length of time.

As described above, according to the third embodiment, immediately after the mobile phone terminal 10b goes out of the WLAN service area, only the profiles and the channels registered in the public wireless base station to which the profile used immediately before the mobile phone terminal 10b goes out of the WLAN service area belongs are scanned; therefore, it is possible to provide a mobile phone terminal having an improved responsiveness of re-connection when the mobile phone terminal returns to the WLAN service area immediately after it has gone out of the WLAN service area and providing a significant power saving effect.

Moreover, scan profiles to be scanned are changed in accordance with an elapse of time. For example, immediately after the mobile phone terminal goes out of the WLAN service area, a profile used immediately before is scanned because the possibility of the mobile phone terminal returning to the same WLAN service area is high. After an elapse of a predetermined length of time, all the profiles are scanned because it cannot be known to which WLAB service area the mobile phone terminal returns. Accordingly, it is possible to provide a mobile phone terminal having an improved responsiveness of re-connection and providing a significant power saving effect.

The present invention may be embodied in various forms other than the embodiments described above. Another embodiment of the present invention will be explained below as a fourth embodiment.

Among the processing explained in the embodiments, all or some of the processing explained to be performed automatically may be performed manually, and all or some of the processing explained to be performed manually may be performed automatically by known methods. In addition, processing procedure, control procedure, specific names, and information including various data and parameters shown in the document or drawings may be optionally modified unless otherwise noted.

All the components of the devices shown in the drawings are functionally and schematically explained, and it is not required that they are configured physically as shown. Specifically, dispersion and integration of each device are not limited to those shown in the drawings, and all or some of the devices can be dispersed or integrated functionally or physically in any unit in accordance with various load and use. All or some of the processing functions performed in each device may be realized by a central processing unit (CPU) and a computer program analyzed and performed by the CPU or may be realized as a hardware by hardware logic.

The wireless communication terminal control method explained in the embodiments may be realized by executing a preliminarily prepared computer program by a computer such as a personal computer or a workstation. This computer program can be distributed through a network such the Internet. Moreover, the computer program may be recorded on a recoding medium that can be read by a computer, such as a hard disk, flexible disc (FD), compact disc-read only memory (CD-ROM), magnetic optical disk (MO), and digital versatile disk (DVD), and may be executed by being read out from the recording medium by a computer.

The disclosed terminal does not require such facilities as an entrance/exit managing apparatus or a card reader, and does not need additional functions to be added to a public network; therefore, the terminal can be realized with low cost. Moreover, it can be used for any type of access points such as those for corporate use or personal use, and for generally used hotspot, without depending on types of the access points. Because it is not necessary to detect a position by using GPS, and thus unnecessary electricity is not consumed for on/off control of WLAN; a mobile phone terminal that can be realized with less cost and a simple configuration, and has a significant power saving effect can be advantageously provided.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A wireless communication terminal that performs first wireless communication via a base station in a public network, and second wireless communication via a wireless LAN access point in a wireless LAN communication network that has a smaller area than that of the wireless public network, the wireless communication terminal comprising:
a base station profile storing unit that stores position information transmitted from the base station, and a wireless LAN profile that is wireless LAN access point information in a communication area of the base station, in association with the position information;
a current position information receiving/storing unit that acquires and stores therein current position information of the wireless communication terminal from the base station;
a wireless profile setting unit that reads out a wireless LAN profile corresponding to the current position information acquired by the current position acquiring/storing unit from the base station profile storing unit, and sets the wireless LAN profile; and
a wireless profile scan unit that scans the wireless LAN access point with the wireless LAN profile that is set by the wireless profile setting unit when the wireless communication terminal is out of a communication service area of the wireless LAN access point.

2. The wireless communication terminal according to claim 1, further comprising a power source control unit that controls to turn off a power source for the second wireless communication when a wireless LAN profile corresponding to the current position information acquired by the current position information acquiring/storing unit is not stored in the base station profile storing unit, and the wireless communication terminal is out of the communication service area of the wireless LAN access point.

3. The wireless communication terminal according to claim 1 or 2, wherein the base station profile storing unit stores the position information, and the wireless LAN profile that is the wireless LAN access point information in the communication area in the base station in association with the position information for each communication channel in the wireless LAN profile.

4. The wireless communication terminal according to any of claims 1 to 3, the wireless communication terminal further comprising an auto-registration unit that automatically registers, when a communication area of the base station changes while staying in the wireless LAN access point area, new position information, and a new wireless LAN profile.

5. The wireless communication terminal according to any of claims 1 to 4, wherein the wireless profile scan unit scans the wireless LAN access point with the wireless LAN profile at shorter intervals in the beginning, and at longer intervals thereafter when the wireless communication terminal goes out of the communication service area of the wireless LAN access point, and scans the wireless LAN access point with the wireless LAN profile at long intervals from the beginning when current position information acquired by the current position information acquiring/storing unit changes, and a wireless LAN profile corresponding to the current position information is stored in the base station profile storing unit while the wireless communication terminal is out of the communication service area of the wireless LAN access point.

6. The wireless communication terminal according to any of claims 1 to 5, wherein, when the wireless communication terminal goes out of the communication service area of the wireless LAN access point, the wireless profile scan unit scans at least two profiles stored in association with a base station to which a wireless LAN profile used immediately before the wireless communication terminal goes out of the communication service area of the wireless LAN access point belongs.

7. The wireless communication terminal according to claim 6, wherein the wireless profile scan unit scans the wireless LAN access point with all profiles stored in the base station profile storing unit after scanning only the profile stored in association with the base station to which the wireless LAN profile used immediately before the wireless communication terminal goes out of the communication service area of the wireless LAN access point belongs, for a predetermined length of time.

8. The wireless communication terminal according to any of claims 1 to 5, wherein the wireless profile scan unit scans for a predetermined length of time only the wireless LAN profile used immediately before the wireless communication terminal goes out of the communication service area of the wireless LAN access point, then scans for a predetermined length of time only the profile stored in association with the base station to which a wireless LAN profile used immediately before the wireless communication terminal goes out of the communication service area of the wireless LAN access point belongs, and then scans the wireless LAN access point with all profiles stored in the base station profile storing unit.

9. A method for performing first wireless communication via a base station in a public network, and second wireless communication via a wireless LAN access point in a wireless LAN communication network that has a smaller area than that of the wireless public network, the method comprising:
storing, in a base station profile storing unit, position information transmitted from the base station, and a wireless LAN profile that is wireless LAN access point information in a communication area of the base station, in association with the position information;
acquiring current position information of the wireless communication terminal from the base station;
reading out a wireless LAN profile corresponding to the acquired current position information from the base station profile storing unit;
setting the wireless LAN profile; and
scanning the wireless LAN profile set by the setting when the wireless communication terminal is out of a communication service area of the wireless LAN access point.

10. A computer program having a computer readable medium including programmed instructions for performing first wireless communication via a base station in a public network, and second wireless communication via a wireless LAN access point in a wireless LAN communication network that has a smaller area than that of the wireless public network, wherein the instructions, when executed by a computer, cause the computer to perform:
storing, in a base station profile storing unit, position information transmitted from the base station, and a wireless LAN profile that is wireless LAN access point information in a communication area of the base station, in association with the position information;
acquiring current position information of the wireless communication terminal from the base station;
reading out a wireless LAN profile corresponding to the acquired current position information from the base station profile storing unit;
setting the wireless LAN profile; and
scanning the wireless LAN profile set by the setting when the wireless communication terminal is out of a communication service area of the wireless LAN access point.
